# EUROPÄISCHE PATENTSCHRIFT

(11) **EP 1 183 976 B1**
(45) Veröffentlichungstag und Bekanntmachung des Hinweises auf die Patenterteilung: **24.11.2004**
(21) Anmeldenummer: 01121118.2
(22) Anmeldetag: 03.09.2001
(51) Int. Cl.: A47J 37/07

(54) **Grillvorrichtung**
Grilling device
Dispositif de grillage

(30) Priorität: 02.09.2000 DE 20015201 U
(43) Veröffentlichungstag der Anmeldung: 06.03.2002
(73) Patentinhaber: Töppe, Yupha, 34289 Zierenberg (DE)
(72) Erfinder: Töppe, Friedrich, 34289 Zierenberg (DE)
(74) Vertreter: Freiherr von Schorlemer, Reinfried, Dipl.-Phys.

(56) Entgegenhaltungen:
- WO-A-97/27792
- DE-A- 3 246 535
- US-A- 4 730 597
- US-A- 5 024 208

## Beschreibung

Die Erfindung betrifft eine Grillvorrichtung der im Oberbegriff des Anspruchs 1 angegebenen Gattung.

Mit Holzkohle od. dgl. beheizte Grillvorrichtungen dieser Art sind zwar in zahlreichen Ausführungsformen bekannt, im Hinblick auf den Verbrennungsprozeß und die Wärmeausnutzung aber nicht optimal. Da sie meistens aus Metallteilen hergestellt sind, werden sie außerdem in den von außen zugänglichen Bereichen sehr heiß, was auch ihren Transport und ihre Aufstellung an einem beliebigen Ort, z. B. auf einem Tisch od. dgl., erschwert oder unmöglich macht. Es ist zwar bekannt (USA-A-5024208), als offene Feuerstellen ausgebildete und zum Erhitzen von Speisen geeignete Kochvorrichtungen mit isolierenden Auskleidungen zu versehen, doch sind derartige Auskleidungen weder ausreichend hitzebeständig noch lebensmitteltauglich. Sie genügen daher nicht den an Grillvorrichtungen zu stellenden Anforderungen.

Ausgehend davon liegt der Erfindung die Aufgabe zugrunde, die Grillvorrichtung der eingangs bezeichneten Gattung so auszubilden, daß sie eine verbesserte Verbrennung und Wärmeausnutzung ermöglicht und auch im aufgeheizten Zustand beliebig transportiert und plaziert werden kann.

Zur Lösung dieser Aufgabe dienen die kennzeichnenden Merkmale des Anspruchs 1.

Die erfindungsgemäße Grillvorrichtung bringt den Vorteil mit sich, daß sie wegen der Herstellung der Verkleidung und des Feuerrosts aus Feuerfestmaterial an ihren Außenseiten und im Bodenbereich weniger heiß wird und daher auch im aufgeheizten Zustand leicht transportiert und auf empfindlichen Unterlagen aufgestellt werden kann. Außerdem wird die Heizkraft der Holzkohle besser als bisher genutzt, da die Wärmeabstrahlung im wesentlichen nur nach oben, d. h. zum Grillrost hin erfolgt.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 und 2 je eine schematische, perspektivische und teilweise aufgebrochene Ansicht einer erfindungsgemäßen Grillvorrichtung;
Fig. 3 ein Grillgerät in Form eines Grillrosts für die Vorrichtung nach Fig. 1 und 2;
Fig. 4 ein Kochgerät in Form eines Kochtopfs für die Vorrichtung nach Fig. 1 und 2;
Fig. 5 ein Grillgerät in Form eines drehbaren Grillstabs für die Vorrichtung nach Fig. 1 und 2;
Fig. 6 und 7 je eine schematische Vorderansicht und Draufsicht auf ein zweites Ausführungsbeispiel einer erfindungsgemäßen Grillvorrichtung, wobei ein Feuerrost und eine Auskleidung jeweils rechts von einem Grillgefäß separat und vor ihrem Einbau dargestellt sind; und
Fig. 8 und 9 den Fig. 6 und 7 entsprechende Ansichten eines dritten Ausführungsbeispiels einer erfindungsgemäßen Grillvorrichtung, wobei ein Feuerrost und eine Verkleidung jeweils oberhalb von einem Grillgefäß angeordnet sind.

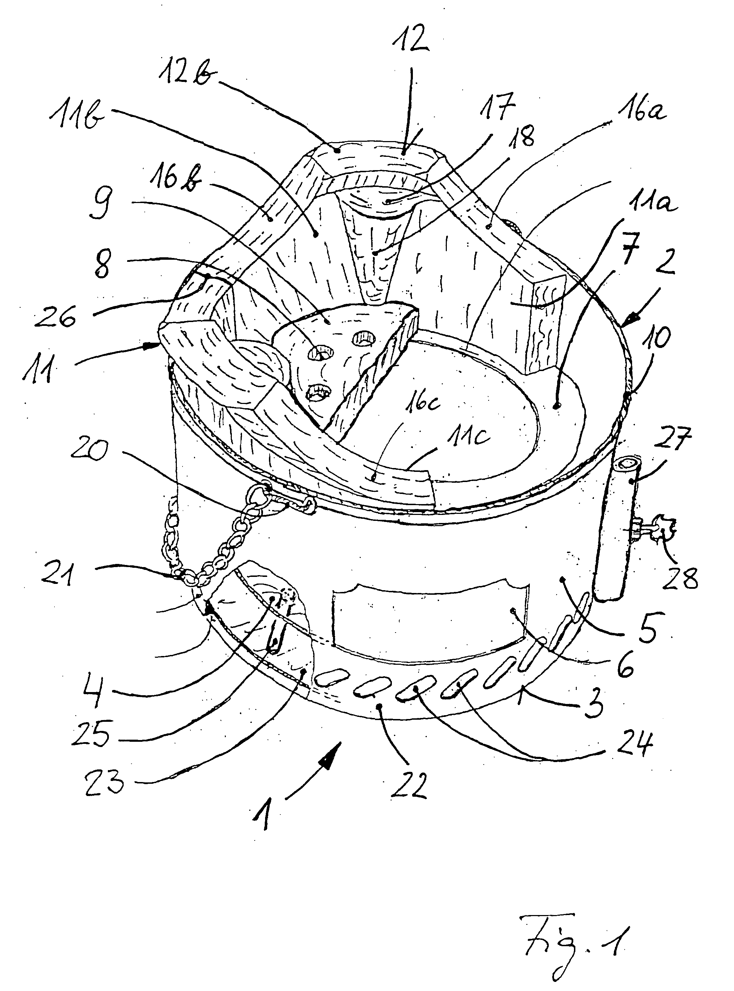

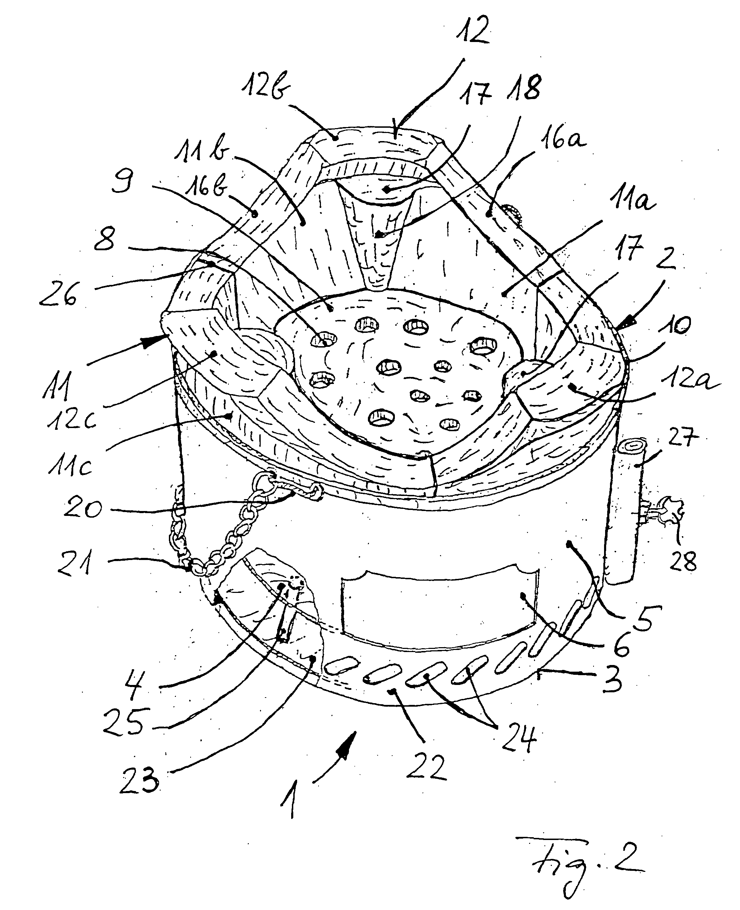

Fig. 1 und 2 zeigen eine erfindungsgemäße, transportable Grillvorrichtung, die zum Grillen, Braten und/oder Kochen verwendet und mit Holz, Holzkohle oder einem ähnlichen Material beheizt werden kann. Die Grillvorrichtung 1 enthält ein aus einem Metall und mit besonderem Vorteil aus Edelstahl bestehendes Grillgefäß 2, das an seiner Unterseite mit einer Standfläche 3 versehen ist, die durch Füße, eine ebene Unterfläche od. dgl. gebildet sein kann. Das Grillgefäß 2 weist einen geschlossenen Boden 4 und einen von dessen äußerem Rand aufragenden, z. B. hohlzylindrischen Mantel 5 auf, der bis auf wenigstens eine Belüftungs- 5 bzw. Zugöffnung 6, die an sich beliebig gestaltet und zweckmäßig in einem unteren Abschnitt des umlaufend ausgebildeten Mantels angeordnet sein kann, ebenfalls geschlossen ist und vorzugsweise einen kreisrunden Querschnitt besitzt.

In einem mittleren Bereich des Mantels 5 und an dessen Innenseite ist eine Auflage 7 vorgesehen, die z. B. aus einem umlaufenden, mit dem Mantel 5 durch Laschen, Winkel, Nieten od. dgl. fest verbundenen Ring besteht, aber auch aus einer Vielzahl von einzelnen, in Umfangsrichtung beabstandeten Auflageelementen bestehen könnte. Die Auflage 7 dient zum Auflegen eines mit Durchgängen 8 versehenen Feuerrosts, der z. B. aus einer einstückig hergestellten Platte besteht. Dabei ist die Anordnung zweckmäßig derart getroffen, daß der Feuerrost 9 lose auf die Auflage 7 aufgelegt und bei Bedarf gegen einen anderen Feuerrost 9 ausgetauscht werden kann. Der Feuerrost 9 ist im Ausführungsbeispiel eine kreisrunde, mit den Durchgängen 8 versehene Scheibe. Außerdem ist die Auflage 7 vorzugsweise in einem mittleren, zwischen dem Boden 4 und einem oberen Rand 10 des Mantels 5 befindlichen Bereich angeordnet. Dadurch umschließen der Feuerrost 9 und der oberhalb von diesem befindliche Teil des Mantels 5 eine Feuer- bzw. Brennstelle für Holzkohle od. dgl., wobei diese Feuerstelle nach oben hin offen ist, während sie seitlich durch den Mantel 5 und nach unten durch den nur die Durchgänge 8 aufweisenden Feuerrost 9 im wesentlichen verschlossen ist. Der Raum zwischen dem Feuerrost 9 und dem Boden 3 dient als Aschekasten.

Der Mantel 5 ist an seiner Innenseite und zumindest oberhalb des Feuerrosts 9 mit einer umlaufend geschlossenen, im wesentlichen hohlzylindrischen Verkleidung 11 versehen. Sowohl diese als auch der Feuerrost 9 besteht erfindungsgemäß aus einem feuerfesten, wärmedämmenden Material, das die Feuerstelle nach den Seiten und nach unten hin umgibt. Unter "feuerfeste" Materialien werden im Rahmen der vorliegenden Erfindung allgemein solche als "Feuerfestmaterialien" bezeichneten Materialien verstanden, die wie insbesondere z. B. Schamotte oder unter Verwendung größerer Mengen davon hergestellte Materialien eine hohe Wärmedämmung bewirken. Durch das Feuerfestmaterial wird erreicht, daß sich zumindest der untere Bereich des Grillgefäßes 2 bei der Benutzung nur unwesentlich aufheizt und dieses daher auch auf empfindliche Unterlagen wie Fliesen, Tischplatten od. dgl. aufgestellt werden kann, ohne daß sich die Gefahr ergibt, daß diese Unterlagen beschädigt werden. Außerdem bleibt der Außenmantel der Grillvorrichtung 1 so kühl, daß er auch bei Benutzung berührt und die Grillvorrichtung 1 daher auch im beheizten Zustand transportiert werden kann. Die Herstellung des Feuerrosts 9 und der Verkleidung 11 erfolgt vorzugsweise dadurch, daß flüssig oder breiig gemachtes Feuerfestmaterial in eine entsprechende Form gegeben und die dadurch in die gewünschte Gestalt gebrachten Teile nach der Entformung gebrannt werden. Dabei können der Feuerrost 9 und die Verkleidung 11 je nach Bedarf einstückig hergestellt oder nach der Herstellung aus mehreren Teilen durch Schrauben, Kleben oder sonstwie zu der aus Fig. 2 ersichtlichen Vorrichtung verbunden werden.

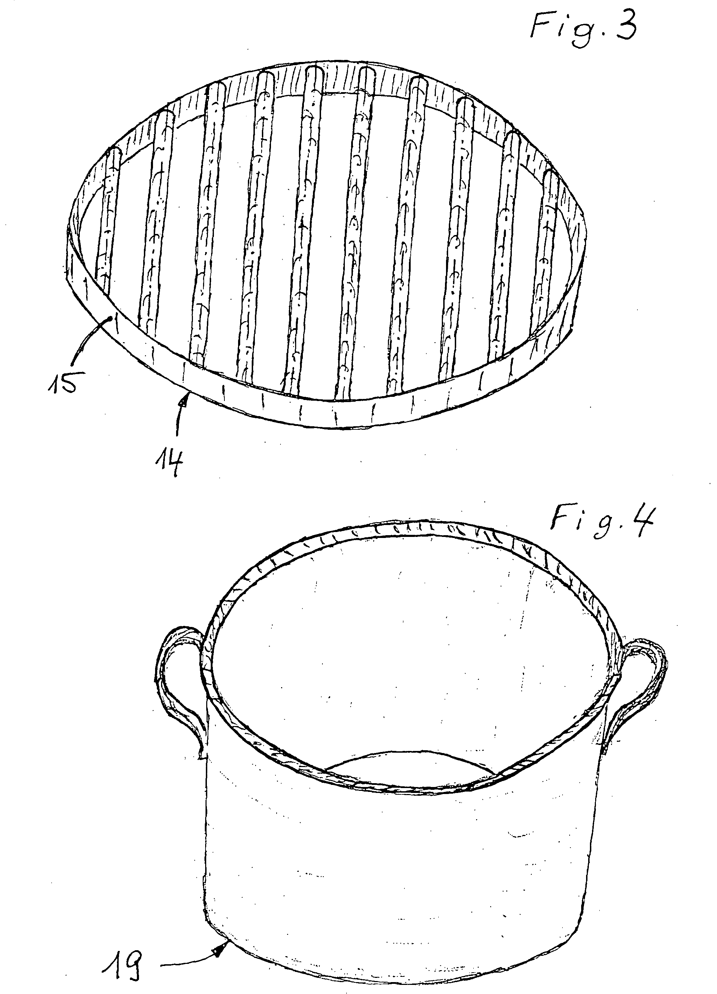

Gemäß Fig. 1 und 2 ragt ein oberer Abschnitt der Verkleidung 11 axial über den oberen Rand 10 hinweg, so daß eine obere Stirnseite der Verkleidung 11 oberhalb des eigentlichen Grillgefäßes 2 liegt. An ihrer oberen Stirnseite ist die Verkleidung 11 mit einer zweckmäßig zur Standfläche 3 parallelen, ersten Auflagefläche 12 für einen Grillrost 14 (Fig. 3) versehen. Dieser weist an seiner Unterseite vorzugsweise einen von seinem Umfangsrand nach unten abstehenden Kragen 15 auf, dessen Innenquerschnitt im wesentlichen dem Außenquerschnitt der oberen Stirnseite der Verkleidung 11 entspricht. Wird der Grillrost 14 daher bei nach unten weisendem Kragen 15 auf die Auflagefläche 12 aufgelegt, wird er durch den Kragen 14 auf der Verkleidung 11 zentriert und gegen unbeabsichtigte radiale Verschiebungen gesichert.

Nach einer besonders bevorzugten Ausführungsform der Erfindung besteht die Auflagefläche 12 nicht aus einer durchgehenden, ringförmigen Auflagefläche, sondem aus einer Mehrzahl von in Umfangsrichtung beabstandeten Flächenabschnitten 12a, 12b und 12c, die durch dazwischen liegende, in die obere Stirnseite der Verkleidung 12 eingearbeitete, konkave Vertiefungen 16a, 16b und 16c unterbrochen bzw. beabstandet sind. Liegt daher der Grillrost 14 auf den Flächenabschnitten 12a bis 12c auf, dann bilden diese muldenartigen Vertiefungen 16a bis 16c unterhalb des Grillrosts 14 angeordnete Öffnungen.

An der Verkleidung 11, vorzugsweise an ihrer Innenwand, ist wenigstens eine zweite Auflagefläche 17 für ein Brat- und/oder Kochgerät ausgebildet. Diese zweite Auflagefläche 17 wird vorzugsweise durch die oberen Oberflächen einer Mehrzahl von Nocken 18 gebildet, die in Umfangsrichtung verteilt angeordnet sind und von der Innenwand radial nach innen ragen. Die Nocken 18 sind vorzugsweise jeweils an zwischen zwei Vertiefungen 16a bis 16c gelegenen Abschnitten der Verkleidung 11 angebracht und so angeordnet, daß sie mit ihren Oberseiten eine parallel zur Standfläche 3 und zu den Flächenabschnitten 12a bis 12c verlaufende, vorzugsweise ebene Auflagefläche bilden.

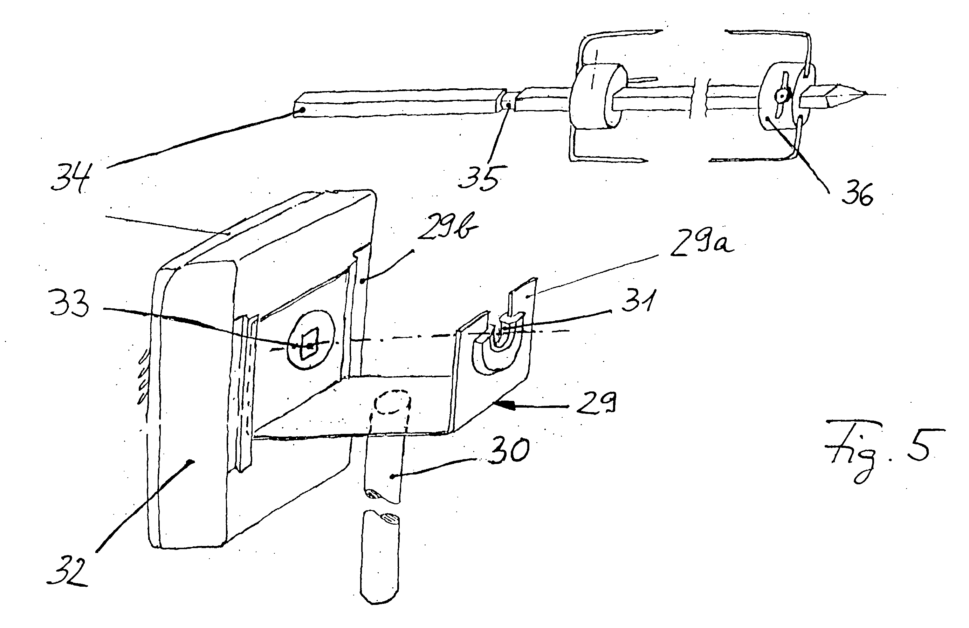

Fig. 4 zeigt ein Kochgerät in Form eines Kochtopfs 19, dessen Außenquerschnitt so gewählt ist, daß dieser einerseits in den oberen Bereich der Verkleidung 11 eingeführt, andererseits derart auf den Nocken 18 abgestellt werden kann, daß ein radial nach der Seite erfolgendes Verschieben des Kochtopfs 19 nur begrenzt möglich ist. Alternativ oder zusätzlich zum Grillrost 14 könnte auch ein zweiter Grillrost vorgesehen sein, dessen Außendurchmesser im wesentlichen dem Innendurchmesser der Verkleidung 11 entspricht, so daß er wie der Kochtopf 19 auf die Nocken 18 aufgelegt werden kann, ohne daß die Gefahr des Herabfallens besteht. Dabei sind die Anordnung und die Abmessungen der Grillvorrichtung 1 zweckmäßig derart gewählt, daß die Vertiefungen 16a bis 16c einerseits zwischen dem Feuerrost 9 und den Auflageflächen 12a bis 12c und 17 angeordnet sind, andererseits bei der Benutzung des Grillrosts 14, des Kochtopfs 19 oder einer entsprechend ausgebildeten Bratpfanne od. dgl. als zusätzliche Zugöffnungen wirken und die Verbrennung des auf den Feuerrost 9 aufgelegten Brennmaterials (z. B. Holz, Holzkohle od. dgl.) fördern. Etwa entstehende Asche kann bei der Benutzung der Grillvorrichtung 1 durch die Durchgänge 8 des Feuerrosts 9 in den als Aschenkammer dienenden unteren Bereich des Grillgefäßes 2 fallen und auf dessen Boden 4 gesammelt werden.

Die Belüftungsöffnung 6 ist mit besonderen Vorteil so groß ausgebildet, daß sie gleichzeitig als Ascheentnahmeöffnung dienen kann. Zu diesem Zweck endet ihre untere Begrenzung vorzugsweise in derselben Ebene wie der Boden 4. Alternativ ist es aber auch möglich, eine derartige Ascheentnahmeöffnung zusätzlich zu einer oder mehreren Belüftungsöffnungen 6 vorzusehen.

Das Grillgefäß 2 bzw. sein oberer Mantel 5 schützen den Feuerrost 9 und die Verkleidung 11 gegen Stoßeinwirkung und Beschädigung. Außerdem dient der Mantel 5 an seiner Außenseite zur Befestigung von Bügeln 20, Haken od. dgl., an denen ein zur Erleichterung des Transports der gesamten Grillvorrichtung 1 bestimmtes Tragelement 21 in Form einer Kette, eines Bügels od. dgl. angebracht werden kann.

In weiterer Ausgestaltung der Erfindung kann das Grillgefäß 1 einen den Mantel 5 unterhalb des Bodens 4 fortsetzendes Mantelabschnitts 22 aufweisen, der an einem Unterboden 23 endet und mit wenigstens einer Belüftungsöffnung 24 versehen ist. Der Mantelabschnitt 22 ist vorzugsweise mit dem Mantel 5 einstückig hergestellt. Der Raum zwischen den Böden 4 und 23 bildet eine Kühlkammer, die eine besonders zuverlässige Hitzeabschirmung nach unten bzw. zur Abstellfläche (Unterlage) hin schafft, so daß die Grillvorrichtung 1 beim Betrieb auch auf einer sehr empfindlichen Unterlage abgestellt werden kann, ohne daß die Gefahr besteht, diese durch Hitzeeinwirkung zu beschädigen. Hierzu ist der Mantelabschnitt 22 bei einer besonders bevorzugten Ausführungsform mit einer Mehrzahl der Lüftungsöffnungen 24 versehen, die in mehreren, in Umfangsrichtung angeordneten Reihen verteilt angeordnet sein können. Hierdurch wird beim Betrieb der Grillvorrichtung 1 der Wärmefluß von oben nach unten erheblich abgeschwächt, da in der Kühlluftkammer zusätzlich eine Luftzirkulation ermöglicht und dadurch ein Wärmestau vermieden wird.

Der Boden 4 kann im Ausführungsbeispiel mit Hilfe von Winkelstücken, Nieten oder sonstwie am Mantel 5 befestigt werden. Dasselbe gilt für die Befestigung des Unterbodens 23 am Mantelabschnitt 22. Alternativ ist es möglich, den Unterboden 23 mit Hilfe von zur Achse des Mantelabschnitts 22 parallelen, auf seiner Oberseite befestigten Rohren oder Stäben 25 an der Unterseite des Bodens 4 aufzuhängen, wobei eine sichere Befestigung wiederum durch Nieten erfolgen kann. Umgekehrt könnte der Boden 4 mit den Stäben 25 auf dem Unterboden 23 abgestützt werden. Außerdem ist klar, daß dem Mantel 5, 22 und den Böden 4, 23 eine optisch ansprechende Außenform gegeben und der Unterboden 23 z. B. mit Füßen versehen werden kann. Zur Erhaltung eines guten optischen Gesamteindrucks der Grillvorrichtung 1 auch nach längerem Gebrauch bestehen alle Metallteile vorzugsweise aus rostfreiem Stahl bzw. Edelstahl.

Wie Fig. 1 und 2 weiter zeigen, kann die Verkleidung 11 in Umfangsrichtung in mehrere Abschnitte 11a, 11b und 11 c unterteilt sein, die längs Dehnungsfugen 26 aneinander stoßen. Die Abschnitte 11a bis 11c sind zur Vereinfachung und Verbilligung der Herstellung zweckmäßig identisch ausgebildet. Zu diesem Zweck enthält jeder Abschnitt 11a bis 11c vorzugsweise einerseits in einem mittleren Bereich je einen der Flächenabschnitte 12a bis 12c sowie einen zugehörigen Nocken 18 und zu beiden Seiten davon je eine Hälfte einer der Vertiefungen 16a bis 16c (Fig. 2). Im Ausführungsbeispiel sind drei solcher Abschnitte 11a bis 11c vorgesehen, so daß diese - in Umfangsrichtung nebeneinander gelegt (Fig. 2) - bis auf die Dehnungsfugen 26 im wesentlichen einen geschlossenen Zylinderabschnitt bilden. Die Anordnung und Montage erfolgt dabei vorzugsweise so, daß der Feuerrost 9 einen Außenquerschnitt erhält, der dem Innenquerschnitt der Verkleidung 11 im montierten Zustand entspricht. Es ist daher z. B. möglich, erst den Feuerrost 9 koaxial und lose auf die Auflage 7 aufzulegen und dann die Verkleidung 11 bzw. die einzelnen Verkleidungsteile 11a bis 11c koaxial von oben her in den Mantel 5 so einzuführten, daß sich deren untere Standflächen ebenfalls auf die Auflage 7 auflegen und dann durch den Feuerrost 9 zentriert gehalten und gegen die Innenseite des Mantels 5 gedrückt werden. Die Montage erfolgt somit durch bloßes Zusammenstecken der verschiedenen Teile. Die Zugöffnung 6 ist je nachdem, welche Variante als optisch ansprechender empfunden wird, z. B. unterhalb eines Flächenabschnitts 12a bis 12c oder unterhalb einer Vertiefung 16a bis 16c angeordnet werden.

Das Ausführungsbeispiel nach Fig. 1 und 2 bietet im übrigen den Vorteil, daß die Hitze, die von der aus Schamotte od. dgl. bestehenden Verkleidung 11 nach unten abgestrahlt wird, zu einem großen Teil vom Mantel 5 und/oder Boden 4 reflektiert wird. Da außerdem das Luftpolster zwischen den Böden 4, 23 als Isolator wirkt, kann sich die Wärme allenfalls über Konvektion durch den vergleichsweise dünnen Mantel 5, 22 hindurch nach unten ausbreiten. Dadurch wird erreicht, daß der Unterboden 23, an diesem angebrachte Füße und der untere Teil des Mantelabschnitts 22 nur unwesentlich über die Umgebungstemperatur hinaus erhitzt werden und daher gefahrlos angefaßt und auf beliebigen Unterlagen abgestellt werden können.

Nach einem bevorzugten Ausführungsbeispiel ist das Grillgefäß 2 an seiner Außenseite mit einem achsparallelen, zylindrischen Führungsrohr 27 versehen, in das eine Feststellschraube 28 eingedreht ist. In dem Führungsrohr 27 kann ein zylindrischer Führungsstab angeordnet und fixiert werden, der an der Unterseite eines nicht dargestellten Grillrosts befestigt ist. Das Führungsrohr 27 bildet dadurch eine Halterung für einen weiteren Grillrost, der oberhalb des Grillgefäßes angeordnet werden und mittels des Führungsrohrs 27, der Feststellschraube 28 und des Führungsstabes in der Höhe verstellt werden könnte. Außerdem ist der Führungsstab im Führungsrohr 27 drehbar, so daß der an ihm befestigte Grillrost bei Bedarf nach der Seite aus dem Wirkungsbereich des Grillgefäßes 2 herausgeschwenkt werden kann.

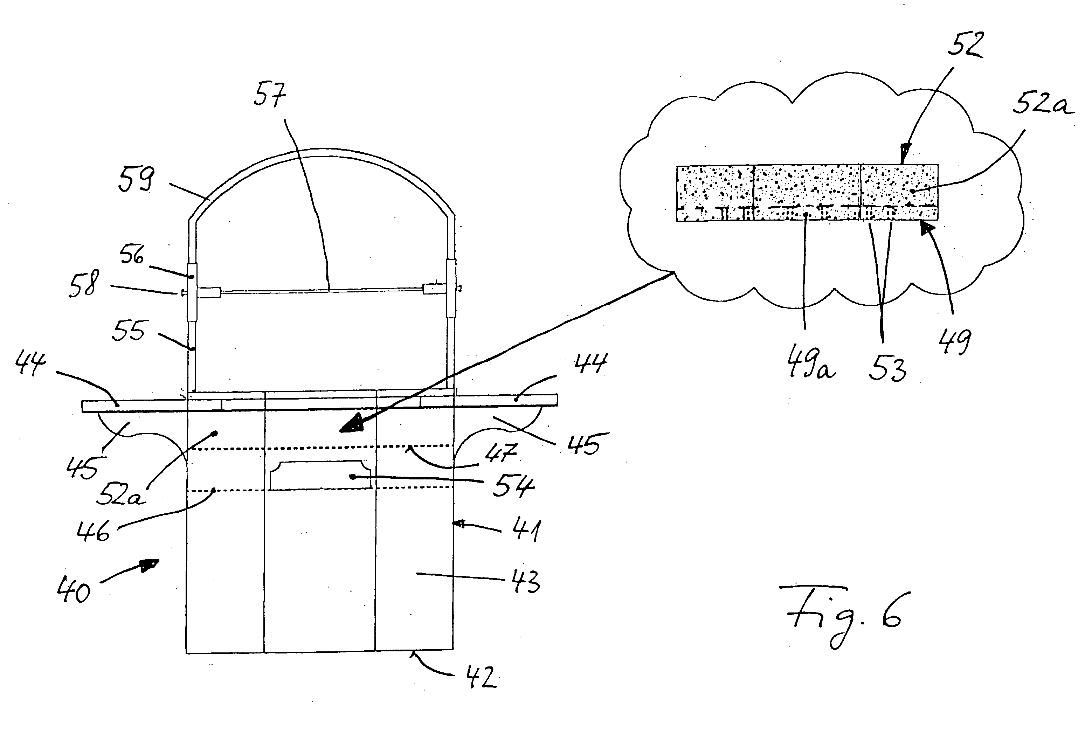

Schließlich zeigt Fig. 5 eine Konsole 29, die auf einem ebenfalls in das Führungsrohr 27 nach Fig. 1 passenden Führungsstab 30 abgestützt ist und zwei parallele, U-förmig verbundene Wandabschnitte 29a, 29b aufweist. Der eine Wandabschnitt 29a besitzt eine halbrunde, nach oben offene Aufnahme 31, während der andere Wandabschnitt 29b mit Mitteln zur lösbaren Befestigung eines z. B. mit Batterien betriebenen Antriebsmotors 32 versehen ist. Dabei ist die Anordnung so, daß eine z. B. mit einer Vierkantöffnung 33 versehene Antriebswelle des Antriebsmotors 32 im montierten Zustand koaxial auf die Aufnahme 31 ausgerichtet ist. Daher kann ein mit einem entsprechenden Vierkantquerschnitt versehener Grillstab 34 mit seinem einen Ende in die Vierkantöffnung 33 gesteckt und mit einer in einem Mittelabschnitt angebrachten Eindrehung 35 in die Aufnahme 31 eingelegt werden, um ihn dadurch drehbar auf der Konsole 29 zu lagern und gleichzeitig antriebsmäßig mit dem Antriebsmotor 32 zu verbinden. Am anderen Ende des Grillstabs 34 sind Mittel 36 zur Befestigung eines an sich beliebigen Grillguts vorgesehen, wobei die Anordnung derart ist, daß sich diese Mittel 36 bei entsprechender Ausrichtung des Grillstabs 34 dicht oberhalb und genau über der oberen Öffnung des Grillgefäßes 2 befinden. Durch Einschalten des Antriebsmotors 32 kann das am Grillstab 34 befestigte Grillgut daher in eine rotierende Bewegung versetzt werden. Wegen der Anwendung der aus Feuerfestmaterial bestehenden Feuerstelle wird dabei auch ein gutes Grillergebnis erzielt, wenn sich das Grillgut in einem größeren Abstand oberhalb der Feuerstelle befindet.

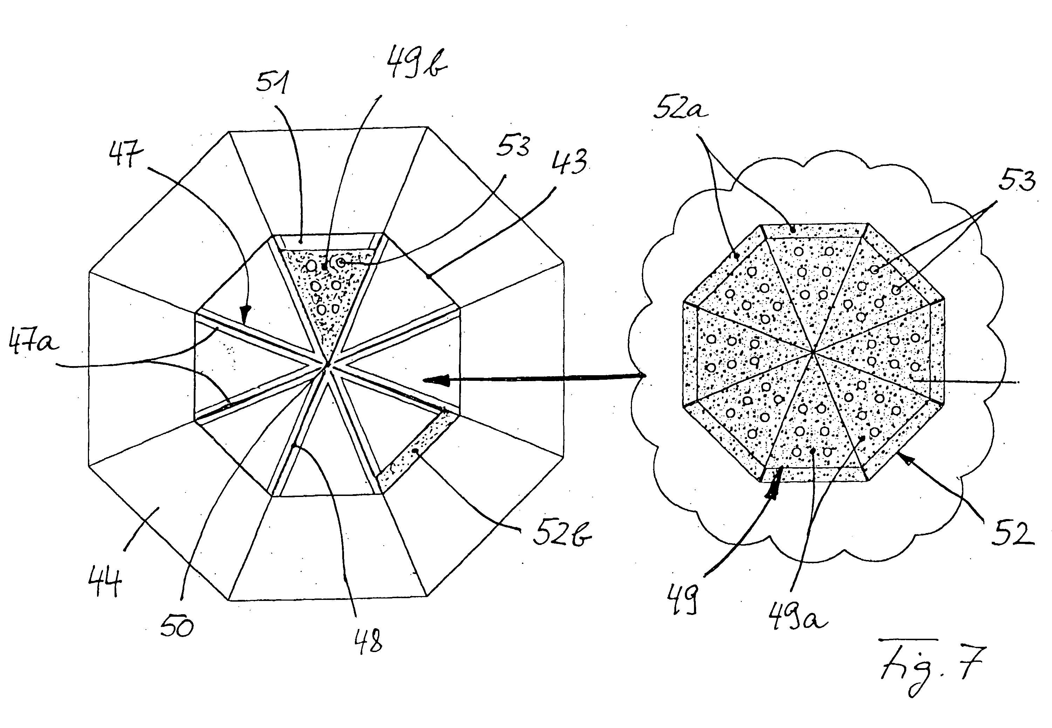

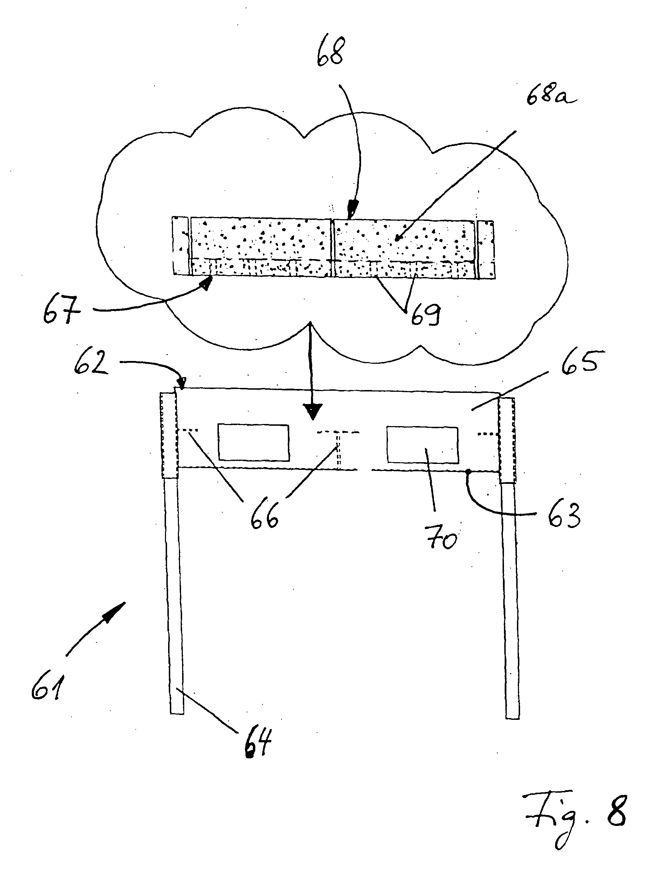

Beim Ausführungsbeispiel nach Fig. 6 und 7 weist eine Grillvorrichtung 40 ein Grillgefäß 41 mit einem gleichseitigen, achteckigen Querschnitt auf. Das Grillgefäß 41 enthält im wesentlichen einen achteckigen, mit seiner Unterseite 42 auf dem Erdboden abgestützten Mantel 43, an dessen oberem Ende wenigstens ein radial nach außen abstehendes Ablageelement 44 befestigt ist. Dieses besteht vorzugsweise aus Holz oder einem anderen, die Wärme schlecht leitenden Material und dient zur Ablage von beim Grillen benötigten Utensilien. Im Ausführungsbeispiel ist das Grillgefäß 41 rundum mit acht solchen Ablageelementen 44 versehen. Die Befestigung dieser Ablageelemente 44 kann z. B. mit Hilfe von an den Mantel 43 angeschweißten Metallbügeln 45 od. dgl. erfolgen, die breite obere Auflageflächen aufweisen, an denen die Ablageelemente 44 z. B. durch Schrauben befestigt werden.

Der Mantel 43 ist in einem mittleren Abschnitt mit einem geschlossenen Boden 46 und mit einer oberhalb des Bodens 46 angeordneten Auflage 47 vorgesehen. Diese ist im Ausführungsbeispiel aus acht Schienen 47a zusammengesetzt, die kreuz- bzw. sternförmig und mit gleichen Winkelabständen relativ zueinander angeordnet sind, wie insbesondere Fig. 7 (links) zeigt. Die radial außen liegenden Enden der Schienen 47a sind z. B. mit der Innenseite des Mantels 43 durch Schweißen oder Nieten verbunden. Im übrigen bestehen die Schienen 47a z. B. aus Flachstahlteilen, die auf ihrer Oberseite je einen über ihre Länge durchgehenden Mittelsteg 48 aufweisen.

Analog zu Fig. 1 und 2 dient die Auflage 47 zum Auflegen eines Feuerrosts 49, der hier z. B. aus acht identischen Teilen 49a besteht, die nach Art von Kreisausschnitten bzw. Tortenstücken die Form von gleichschenkligen Dreiecken mit zwei langen Seiten und einer diese verbindenden kurzen Seite haben. Die Teile 49a sind so bemessen, daß sie genau in die von zwei benachbarten Mittelstegen 48 gebildeten Räume passen und dabei mit ihren langen Seitenkanten auf die neben den Mittelstegen 48 befindlichen Abschnitte der Schienen 47a aufgelegt werden können, wie im rechten Teil der Fig. 7 gezeigt ist. Außerdem ist die radiale Länge der Teile 49a so gewählt, daß sie mit ihren durch die langen Seiten gebildeten Ecken bis in das Zentrum 50 der Auflage 47 geschoben werden können, um dort entsprechend Fig. 7 (rechts) aneinander zu grenzen und den im wesentlichen geschlossenen Feuerrost 49 zu bilden.

In der aus Fig. 7 (rechts) ersichtlichen Lage des Feuerrosts 49 und seiner Teile 49a sind deren kurze Seiten unter Bildung von Zwischenräumen 51 mit einem vorgewählten Abstand von den Innenflächen des Mantels 43 angeordnet, wie für ein Teil 49b in Fig. 7 (links) angedeutet ist. Dieser Abstand ist entsprechend der Dicke von acht plattenförmigen Verkleidungsteilen 52a gewählt, die nach dem Verlegen der Teile 49a genau in die Zwischenräume 51 passen und eine rundum geschlossene, auf der Innenseite des Mantels 43 liegende Verkleidung 52 bilden. Alternativ können die Verkleidungsteile 52a auch, wie in Fig. 7 (links) für ein Verkleidungsteil 52b angedeutet ist, zuerst auf die Auflage 47 gelegt werden, um im Anschluß daran die Teile 49a aufzulegen. Die Verkleidungsteile 52a, 52b kommen daher wie beim Ausführungsbeispiel nach Fig. 1 und 2 auf an den Mantel 43 grenzenden Teilen der Auflage 47 zu liegen, während der Feuerrost 49 auf radial nach innen unter der Verkleidung 52 herausragende Abschnitte der Auflage 47 aufgelegt wird. Nach der Montage sind die Auskleidungsteile 52a analog zu Fig. 1 und 2 durch den Feuerrost 49 zentriert und in Anlage mit der Innenseite des Mantels 43 gehalten. Die Höhe der Verkleidungsteile 52a ist im Ausführungsbeispiel so gewählt, daß sie mit dem oberen Rand des Grillgefäßes 41 im wesentlichen bündig abschließen (Fig. 6) und mit dem Feuerrost 49 einen ausreichend großen Brenn- bzw. Feuerraum begrenzen.

Auch beim Ausführungsbeispiel nach Fig. 6 und 7 sind die Teile 49a des Feuerrosts 49 und die Verkleidungsteile 52a aus einem Feuerfestmaterial wie z. B. Schamotte hergestellt, während das Grillgefäß 41 aus Metall, vorzugsweise aus Edelstahl besteht, so daß sich insoweit dieselben Vorteile ergeben, wie sie oben anhand der Fig. 1 und 2 beschrieben sind. Wie dort weist der Feuerrost 49 außerdem Durchgänge 53 und der Mantel 43 zweckmäßig eine am Boden 46 endende Belüftungs- und Aschenentnahmeöffnung 54 auf. Im übrigen kann die Grillvorrichtung 40 entsprechend Fig. 1 und 2 ausgebildet und z. B. in dem unterhalb des Bodens 46 liegenden Mantelabschnitt mit Belüftungsöffnungen versehen sein, um eine Kühlkammer zu bilden.

Beim Ausführungsbeispiel nach Fig. 6 und 7 ist oberhalb des Grillgefäßes 41 ein nur in Fig. 6 dargestelltes, aus vertikal angeordneten, geraden Führungsstangen 55 gebildetes Gestell z. B. durch Schweißen befestigt. An den Führungsstangen 55 sind Führungshülsen 56 verschiebbar gelagert, zwischen denen ein Grillrost 57 befestigt ist. Wenigstens einer Führungshülse 56 ist eine Feststellschraube 58 zugeordnet, um den Grillrost 57 in einer gewünschten Höhe über dem Grillgefäß 41 bzw. der von diesem gebildeten Feuerstelle zu fixieren. Ein die oberen Enden der Führungsstangen 55 verbindender Querbügel 59 kann als Traggriff für die Grillvorrichtung 40 dienen, sofern diese insgesamt ausreichend leicht ausgebildet ist.

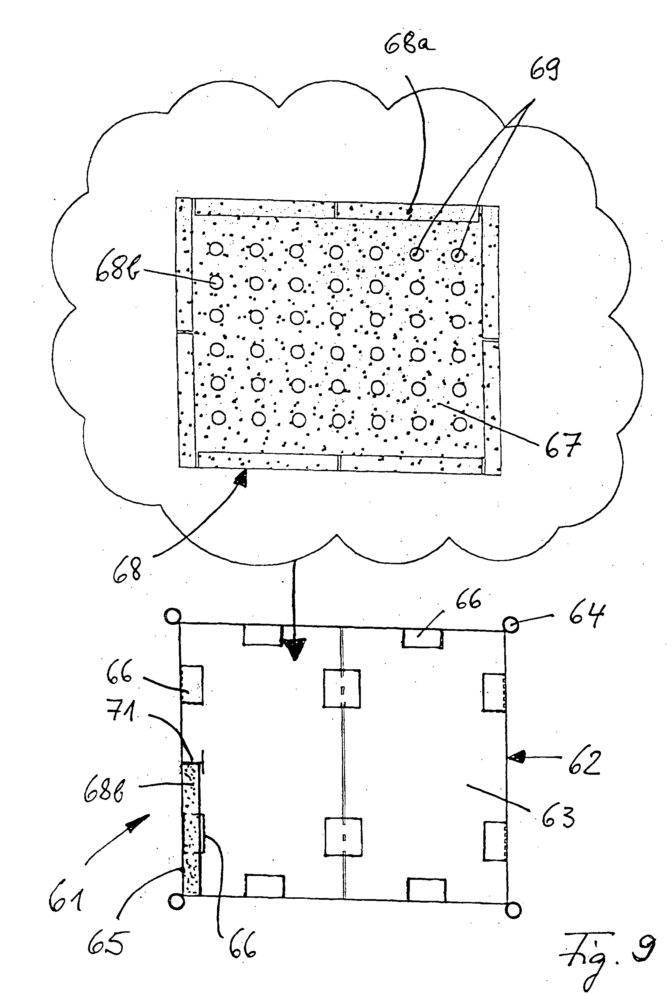

Fig. 8 und 9 zeigen ein Ausführungsbeispiel einer Grillvorrichtung 61 mit einem Grillgefäß 62, das einen rechteckigen Querschnitt besitzt. Im Gegensatz zu Fig. 1 bis 7 endet das Grillgefäß 62 an einem Boden 63, an dessen Unterseite zum Abstellen auf dem Erdboden bestimmte Stützen 64 bzw. Stellfüße befestigt sind. Das Grillgefäß 62 weist wiederum einen vom Rand des Bodens 63 aufragenden Mantel 65 auf, der an seiner Innenseite mit einer Auflage 66 in Form einer Mehrzahl von radial nach innen ragenden Winkelstücken od. dgl. versehen ist. Diese sind mit einem geeigneten Abstand vom Boden 63 so angeordnet und ausgebildet, daß ein aus einem Stück oder aus mehreren Teilen bestehender Feuerrost 67 auf sie aufgelegt werden kann. Analog zu Fig. 1 bis 7 ist außerdem eine Verkleidung 68 vorgesehen, die vorzugsweise eine Mehrzahl von Verkleidungsteilen 68a, 68b enthält, die ebenfalls auf der Auflage 66 abgelegt werden können. Dabei wird die Länge der einzelnen Verkleidungsteile 68a, 68b vorzugsweise so gewählt, daß der Abstand zwischen zwei gegenüberliegenden Seiten des rechteckigen Mantels 65 genau durch diese Länge teilbar ist und kein Rest verbleibt. Wie insbesondere Fig. 9 zeigt, können dabei kurze und lange Auskleidungsteile 68a, 68b vorgesehen sein, die die Innenwand des Mantels 65 rundum ausfüllen und an dieser lückenlos anliegen. Dagegen ist die äußere Kontur des Feuerrosts 67 so gewählt, daß sie genau der Innenkontur der Verkleidung 68 nach dem ordnungsgemäßen Verlegen der Verkleidungsteile 68a, 68b entspricht und diese daher im unteren Bereich zentriert und gegen die Innenwand des Mantels 65 gedrückt werden. Die Höhe der Verkleidungsteile 68a, 68b ist hier so gewählt, daß ihre obere Enden im wesentlichen bündig mit der Oberkante des Mantels 65 abschließen und eine ausreichend hohe Feuerstelle erhalten wird. Außerdem ist der Feuerrost 67 mit Durchgängen 69 und der Mantel 65 zwischen dem Boden 63 und der Auflage 66 mit wenigstens einer bis zum Boden 63 reichenden Ascheentnahmeöffnung 70 versehen.

Der Grillvorrichtung 61 kann schließlich analog zu Fig. 1 bis 7 eine nicht dargstellte Halterung zur höhenverstellbaren Anordnung eines ebenfalls nicht dargestellten Grillrosts zugeordnet sein. Im übrigen gilt für die Funktion der Grillvorrichtung 61 und ihre Vorteile dasselbe wie für die oben anhand der Fig. 1 bis 7 beschriebenen Grillvorrichtungen 1 und 40.

Die Erfindung ist nicht auf die beschriebenen Ausführungsbeispiele beschränkt, die auf vielfache Weise abgewandelt werden könnten. Dies gilt insbesondere für die beschriebenen Formen der Grillgefäße, der Auskleidungen und der Feuerroste, die auch andere Querschnitte aufweisen könnten, sowie die Zahl der Teile, aus denen die Grillvorrichtung 1, 40 bzw. 61 hergestellt wird. Auch die Zahl und die Größe der Öffnungen 6, 54 und 70 sowie Vertiefungen 16a bis 16 c (Fig. 1) kann in Abhängigkeit von den Erfordernissen des Einzelfalls und der gewünschten Frischluftzufuhr gewählt werden. Außerdem kann die Grillvorrichtung mit weriteren oder anderen Auflagen versehen werden, um die beschriebenen oder andere Grill-, Brat- oder Kochgeräte aufzunehmen. Dabei ist es möglich, den Außenquerschnitt nicht, wie beschrieben, gleich dem Innenquerschnitt der jeweiligen Verkleidung, sondern gleich dem Innenquerschnitt des jeweiligen Mantels auszubilden und die Verkleidung auf dem äußeren Rand des Feuerrosts abzustützen. Die einzelnen Verkleidungsteile könnten in diesem Fall, wie z. B. in Fig. 8 für ein Verkleidungsteil 68b angedeutet ist, mit Hilfe von Klammern, Bügeln 71 od. dgl. daran gehindert werden, nach innen einzufallen. Schließlich versteht sich, daß die einzelnen Merkmale auch in anderen als den dargestellten und beschriebenen Kombinationen verwendet werden können.

## Patentansprüche

1. Grillvorrichtung, enthaltend: ein aus Metall hergestelltes Grillgefäß (2, 41, 62) mit einem Boden (4. 46. 63) und einem von dessen Rand aufragenden. umlaufend ausgebildeten Mantel (5, 43, 65), einen mit Durchgängen (8, 53, 69) versehenen Feuerrost (9, 49, 67), eine an der Innenseite und in einem mittleren Bereich des Mantels (5, 43, 65) angeordnete Auflage (7, 67, 66) für den Feuerrost (9, 49, 67), eine zwischen dem Boden (4, 6, 63) und der Auflage (7, 47, 66) angeordnete, im Mantel (5, 43, 64) ausgebildete Belüftungsöffnung, wobei der Mantel (5, 43, 65) an seiner Innenseite und zumindest oberhalb des Feuerrosts (9, 49, 67) mit einer Verkleidung (11, 52, 68) versehen ist, **gekennzeichnet durch** einen Grillrost (14, 57) und eine Halterung zur Anordnung des Grillrosts (14, 57) oberhalb des Feuerrosts (9, 49, 67), wobei die Verkleidung (11, 52, 68) und der Feuerrost (9, 49, 67) aus einem Feuerfestmaterial hergestellt sind.

2. Grillvorrichtung nach Anspruch 1, **dadurch gekennzeichnet, daß** die Verkleidung (11, 52, 68) aus einer Mehrzahl von Verkleidungsteilen (11a bis 11c; 52a, 52b; 68a, 68b) besteht, die in Umfangsrichtung des Mantels (5, 43, 65) aneinander grenzen.

3. Grillvorrichtung nach Anspruch 2, **dadurch gekennzeichnet, daß** der Mantel (5, 43, 65) einen kreisrunden oder gleichseitigen, mehreckigen Querschnitt besitzt und die Verkleidungsteile (11a bis 11c; 52a, 52b; 68a, 68b) identisch ausgebildet sind.

4. Grillvorrichtung nach einem der Ansprüche 1 bis 3, **dadurch gekennzeichnet, daß** der Feuerrost (9, 49, 67) aus einer einstückig hergestellten Platte besteht.

5. Grillvorrichtung nach einem der Ansprüche 2 bis 4, **dadurch gekennzeichnet, daß** die Verkleidung (11, 52, 68) und der Feuerrost (9, 49, 67) lose in das Grillgefäß (2, 41, 62) eingelegt sind.

6. Grillvorrichtung nach Anspruch 5, **dadurch gekennzeichnet, daß** die Verkleidung (11, 52, 68) auf an den Mantel (5, 43, 65) grenzende Teile der Auflage (7, 47, 66), der Feuerrost (9,49, 67) dagegen auf radial nach innen unter der Verkleidung (11, 52, 68) herausragende Abschnitte der Auflage (7, 47, 66) auflegbar ist.

7. Grillvorrichtung nach Anspruch 6, **dadurch gekennzeichnet, daß** der Außenquerschnitt des Feuerrosts (9, 49, 67) gleich dem Innenquerschnitt der im montierten Zustand befindlichen Verkleidung (11, 52, 68) gewählt ist.

8. Grillvorrichtung nach einem der Ansprüche 1 bis 7, **dadurch gekennzeichnet, daß** das Grillgefäß (2) einen den Mantel (5) unterhalb des Bodens (3) fortsetzenden Mantelabschnitt (22) aufweist, der an einem Unterboden (23) endet und mit Belüftungsöffnungen (24) versehen ist.

9. Grillvorrichtung nach Anspruch 8, **dadurch gekennzeichnet, daß** der Mantel (5) und der Mantelabschnitt (22) eine einstückig hergestellte, umlaufende Gefäßwand bilden.

10. Grillvorrichtung nach einem der Ansprüche 1 bis 7, **dadurch gekennzeichnet, daß** das Grillgefäß (61) mit zum Abstellen am Boden bestimmten Stützen (64) versehen ist.

11. Grillvorrichtung nach einem der Ansprüche 1 bis 9, **dadurch gekennzeichnet, daß** das Grillgefäß (41) mit wenigstens einem radial nach außen abstehenden Ablageelement (44) versehen ist.

12. Grillvorrichtung nach einem der Ansprüche 1 bis 11, **dadurch gekennzeichnet, daß** die Halterung für den Grillrost (14) eine an der oberen Stirnseite der Verkleidung (11) ausgebildete Auflagefläche (12) enthält.

13. Grillvorrichtung nach Anspruch 12, **dadurch gekennzeichnet, daß** die Auflagefläche (12) mehrere Flächenabschnitte (12a bis 12c) aufweist, die durch muldenartige, als zusätzliche Belüftungsöffnungen dienende Vertiefungen (16a bis 16c) unterbrochen sind.

14. Grillvorrichtung nach einem der Ansprüche 1 bis 13, **dadurch gekennzeichnet, daß** an der Innenseite der Verkleidung (11) wenigstens eine Auflage (17) für ein Brat- und/oder Kochgerät (19) und/oder einen weiteren Grillrost vorgesehen ist.

15. Grillvorrichtung nach einem der Ansprüche 1 bis 13, **dadurch gekennzeichnet, daß** das Grillgefäß (2, 41, 62) mit Ausnahme der Verkleidung (11, 52, 68) und des Feuerrost (9, 49, 67) aus Edelstahl hergestellt ist.

16. Grillvorrichtung nach einem der Ansprüche 1 bis 15, **dadurch gekennzeichnet, daß** der Mantel (5, 43, 65) mit einer zwischen dem Boden (4, 46, 63) und der Auflage (7, 47, 66) angeordneten Ascheentnahmeöffnung (6, 54, 70) versehen ist.

17. Grillvorrichtung nach einem der Ansprüche 1 bis 16, **dadurch gekennzeichnet, daß** sie ein auf der Außenseite des Mantels (5) befestigtes Tragelement (21) enthält.

18. Grillvorrichtung nach einem der Ansprüche 1 bis 17, **dadurch gekennzeichnet, daß** die Halterung für den Grillrost (57) an einer am Grillgefäß (41) angeordneten und befestigten Führung (55) in der Höhe verstellbar gelagert ist.

19. Grillvorrichtung nach Anspruch 18, **dadurch gekennzeichnet, daß** die Führung ein an der Außenseite des Mantels (5) befestigtes Führungsrohr (27) und einen in diesem axial verstellbaren Führungsstab (30) enthält.

20. Grillvorrichtung nach Anspruch 19, **dadurch gekennzeichnet, daß** ihr eine Konsole (29) zugeordnet ist, die einen in das Führungsrohr (27) passenden Führungsstab (30), eine Aufnahme (31) zur drehbaren Lagerung eines Grillstabes (34) und ein Mittel zur lösbaren Befestigung eines mit dem Grillstab (34) koppelbaren Antriebsmotors (32) aufweist.

## Claims

1. Barbecue comprising: a grill container (2, 41, 62) made from metal with a base (4, 46, 63) and a circumferential shell (5, 43, 65) projecting from its edge, a flame grid (9, 49, 67) provided with perforations (8, 53, 69), a support (7, 67, 66) for the flame grid (9, 49, 67) disposed on the inside and in a central region of the shell (5, 43, 65), a ventilation opening provided in the shell (5, 43, 64) and arranged between the base (4, 6, 63) and the support (7, 47, 66), wherein the shell (5, 43, 65) is fitted with a lining (11, 52, 68) on its inside and at least above the flame grid (9, 49, 67), **characterised by** a grill (14, 57) and a mounting for arrangement of the grill (14, 57) above the flame grid (9, 49, 67), wherein the lining (11, 52, 68) and the flame grid (9, 49, 67) are made from a refractory material.

2. Barbecue according to Claim 1, **characterised in that** the lining (11, 52, 68) comprises a plurality of lining parts (11a to 11c; 52a, 52b; 68a, 68b), which adjoin one another in the circumferential direction of the shell (5, 43, 65).

3. Barbecue according to Claim 2, **characterised in that** the shell (5, 43, 65) has a circular or equal-sided polygonal cross-section and the lining parts (11a to 11c; 52a, 52b; 68a, 68b) are of identical configuration.

4. Barbecue according to one of Claims 1 to 3, **characterised in that** the flame grid (9, 49, 67) consists of a plate made in one piece.

5. Barbecue according to one of Claims 2 to 4, **characterised in that** the lining (11, 52, 68) and the flame grid (9, 49, 67) are laid unattached in the grill container (2, 41, 62).

6. Barbecue according to Claim 5, **characterised in that** the lining (11, 52, 68) may be laid on parts of the support (7, 47, 66) adjoining the shell (5, 43, 65), whereas the flame grid (9, 49, 67) may be laid on sections of the support (7, 47, 66) projecting radially inwards under the lining (11, 52, 68).

7. Barbecue according to Claim 6, **characterised in that** the external cross-section of the flame grid (9, 49, 67) is selected to be equal to the internal cross-section of the lining (11, 52, 68) positioned in the installed state.

8. Barbecue according to one of Claims 1 to 7, **characterised in that** the grill container (2) has a shell section (22), which continues the shell (5) under the base (3) and which terminates at a sub-base (23) and is provided with ventilation openings (24).

9. Barbecue according to Claim 8, **characterised in that** the shell (5) and the shell section (22) form a circumferential grill container wall made in one piece.

10. Barbecue according to one of Claims 1 to 7, **characterised in that** the grill container (61) is provided with supporting legs (64) for placement on the ground.

11. Barbecue according to one of Claims 1 to 9, **characterised in that** the grill container (41) is provided with at least one supporting element (44) projecting radially outwards.

12. Barbecue according to one of Claims 1 to 11, **characterised in that** the mounting for the grill (14) contains a supporting surface (12) provided on the upper face of the lining (11).

13. Barbecue according to Claim 12, **characterised in that** the supporting surface (12) has several surface sections (12a to 12c), which are interrupted by trough-like depressions (16a to 16c) serving as additional ventilation openings.

14. Barbecue according to one of Claims 1 to 13, **characterised in that** at least one support (17) is provided on the inside of the lining (11) for a roasting and/or cooking device (19) and/or a further grill.

15. Barbecue according to one of Claims 1 to 13, **characterised in that** apart from the lining (11, 52, 68) and the flame grid (9, 49, 67), the grill container (2, 41, 62) is made from stainless steel.

16. Barbecue according to one of Claims 1 to 15, **characterised in that** the shell (5, 43, 65) is provided with an ash removal opening (6, 54, 70) arranged between the base (4, 46, 63) and the support (7, 47, 66).

17. Barbecue according to one of Claims 1 to 16, **characterised in that** it contains a carrying element (21) fastened on the outside of the shell (5).

18. Barbecue according to one of Claims 1 to 17, **characterised in that** the mounting for the grill (57) is disposed to be adjustable in height on a guide means (55) arranged and fastened on the grill container (41).

19. Barbecue according to Claim 18, **characterised in that** the guide means contains a guide tube (27) fastened on the outside of the shell (5) and a guide rod (30) axially adjustable therein.

20. Barbecue according to Claim 19, **characterised in that** it has an associated bracket (29), which has a guide rod (30) fitting into the guide tube (27), a receiving means (31) for the rotatable mounting of a spit (34) and a means for detachably fastening a drive motor (32), which can be coupled to the spit (34).

## Revendications

1. Dispositif de grill, comprenant : un fût de grill (2, 41, 62) en métal avec un fond (4, 46, 63) et une virole (5, 43, 65) s'élevant à partir de son bord et formée de manière circulaire, une grille de foyer (9, 49, 67) pourvue de passages (8, 53, 69), un support (7, 47, 66) pour la grille de foyer (9, 49, 67), disposé sur la face interne et à mi-hauteur de la virole (5, 43, 65), une ouverture d'aération dans la virole (5, 43, 65), placée entre le fond (4, 46, 63) et le support (7, 47, 66), la virole (5, 43, 65) étant pourvue d'un revêtement (11, 52, 68) sur sa face interne et au moins au-dessus de la grille de foyer (9, 49, 67), **caractérisé par** une grille (14, 57) et un support pour disposer la grille (14, 57) au-dessus de la grille de foyer (9, 49, 67), le revêtement (11, 52, 68) et la grille de foyer (9, 49, 67) étant fabriqués à partir d'un matériau réfractaire.

2. Dispositif de grill selon la revendication 1, **caractérisé en ce que** le revêtement (11, 52, 68) se compose d'une pluralité de parties de revêtement (11a jusqu'à 11c ; 52a, 52b ; 68a, 68b) qui sont contiguës dans le sens circulaire de la virole (5, 43, 65).

3. Dispositif de grill selon la revendication 2, **caractérisé en ce que** la virole (5, 43, 65) possède une coupe transversale polygonale, circulaire ou équilatérale, et que les parties de revêtement (11a jusqu'à 11c ; 52a, 52b ; 68a, 68b) sont formées de manière identique.

4. Dispositif de grill selon l'une des revendications 1 à 3, **caractérisé en ce que** la grille de foyer (9, 49, 67) se compose d'une plaque monobloc.

5. Dispositif de grill selon l'une des revendications 2 à 4, **caractérisé en ce que** le revêtement (11, 52, 68) et la grille de foyer (9, 49, 67) sont placés de manière amovible dans le fût de grill (2, 41, 62).

6. Dispositif de grill selon la revendication 5, **caractérisé en ce que** le revêtement (11, 52, 68) peut être déposé sur des parties du support (7, 47, 66) contiguës à la virole (5, 43, 65), la grille de foyer (9, 49, 67) est au contraire déposée sur des parties du support (7, 47, 66) dépassant radialement vers l'intérieur en dessous du revêtement (11, 52, 68).

7. Dispositif de grill selon la revendication 6, **caractérisé en ce que** la coupe transversale extérieure de la grille de foyer (9, 49, 67) est choisie égale à la coupe transversale interne du revêtement (11, 52, 68) qui est monté.

8. Dispositif de grill selon l'une des revendications 1 à 7, **caractérisé en ce que** le fût de grill (2) comporte une partie de virole (22) prolongeant la virole (5) en dessous du fond (3), qui se termine au niveau d'un sous-fond (23) et qui est pourvue d'ouvertures d'aération (24).

9. Dispositif de grill selon la revendication 8, **caractérisé en ce que** la virole (5) et la partie de virole (22) forment une paroi de fût circulaire et monobloc.

10. Dispositif de grill selon l'une des revendications 1 à 7, **caractérisé en ce que** le fût de grill (62) est pourvu de pieds (64) destinés à le déposer sur le sol.

11. Dispositif de grill selon l'une des revendications 1 à 9, **caractérisé en ce que** le fût de grill (41) est pourvu d'au moins un élément de desserte (44) saillant radialement vers l'extérieur.

12. Dispositif de grill selon l'une des revendications 1 à 11, **caractérisé en ce que** le support pour la grille (14) comporte un plan de pose (12) situé au niveau de la face supérieure du revêtement (11).

13. Dispositif de grill selon la revendication 12, **caractérisé en ce que** le plan de pose (12) comporte plusieurs parties de surface (12a jusqu'à 12c) qui sont interrompues par des dégagements (16a jusqu'à 16c) en forme d'auge servant d'ouvertures supplémentaires pour l'aération.

14. Dispositif de grill selon l'une des revendications 1 à 13, **caractérisé en ce qu'**au moins un support (17) est prévu au niveau de la face interne du revêtement (11) pour un appareil (19) permettant de rôtir et/ou de cuire et/ou pour une grille supplémentaire.

15. Dispositif de grill selon l'une des revendications 1 à 13, **caractérisé en ce que** le fût de grill (2, 41, 62) est fabriqué à partir d'acier, à l'exception du revêtement (11, 52, 68) et de la grille de foyer (9, 49, 67).

16. Dispositif de grill selon l'une des revendications 1 à 15, **caractérisé en ce que** la virole (5, 43, 65) est pourvue d'une ouverture (6, 54, 70)pour prélever les cendres entre le fond (4, 46, 63) et le support (7, 47, 66).

17. Dispositif de grill selon l'une des revendications 1 à 16, **caractérisé en ce qu'**il comporte un élément de transport (21) fixé sur la face externe de la virole (5).

18. Dispositif de grill selon l'une des revendications 1 à 17, **caractérisé en ce que** le support pour la grille (57) est monté, réglable en hauteur, sur un guidage (55) disposé et fixé sur le fût de grill (41).

19. Dispositif de grill selon la revendication 18, **caractérisé en ce que** le guidage comporte un tube de guidage (27) fixé au niveau de la paroi externe de la virole (5) et comporte dans celui-ci une barre de guidage (30) réglable axialement.

20. Dispositif de grill selon la revendication 19, **caractérisé en ce qu'**une console (29) lui est attribuée, qui comporte une barre de guidage (30) adapté au tube de guidage (27), un palier (31) pour supporter une barre de grill tournante (34) et un moyen pour fixer de manière amovible un moteur de commande (32) qui peut être relié à la barre de grill (34).
